(19) Europäisches Patentamt / European Patent Office / Office européen des brevets

(11) **EP 3 248 187 B1**

(12) **EUROPÄISCHE PATENTSCHRIFT**

(45) Veröffentlichungstag und Bekanntmachung des Hinweises auf die Patenterteilung:
**28.07.2021 Patentblatt 2021/30**

(51) Int Cl.:
***G10K 11/30*** *(2006.01)*   ***B06B 3/04*** *(2006.01)*
***G01F 1/66*** *(2006.01)*

(21) Anmeldenummer: **15816102.6**

(22) Anmeldetag: **07.12.2015**

(86) Internationale Anmeldenummer:
**PCT/EP2015/078802**

(87) Internationale Veröffentlichungsnummer:
**WO 2016/116203 (28.07.2016 Gazette 2016/30)**

(54) **VERFAHREN ZUR HERSTELLUNG EINES SCHALLWANDLERS FÜR EIN FELDGERÄT DER AUTOMATISIERUNGSTECHNIK**

METHOD FOR PRODUCING A SOUND TRANSDUCER FOR A FIELD DEVICE IN AUTOMATION TECHNOLOGY

PROCÉDÉ DE FABRICATION D'UN TRANSDUCTEUR ACOUSTIQUE DESTINÉ À UN APPAREIL DE TERRAIN DANS LE DOMAINE DE L'AUTOMATISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.01.2015 DE 102015100670**

(43) Veröffentlichungstag der Anmeldung:
**29.11.2017 Patentblatt 2017/48**

(73) Patentinhaber: **Endress+Hauser Flowtec AG**
**4153 Reinach (CH)**

(72) Erfinder:
• **WIEST, Achim**
**79576 Weil am Rhein (DE)**
• **BERGER, Andreas**
**79686 Hasel-Glashütten (DE)**

(74) Vertreter: **Andres, Angelika Maria**
**Endress+Hauser Group Services**
**(Deutschland) AG+Co. KG**
**Colmarer Straße 6**
**79576 Weil am Rhein (DE)**

(56) Entgegenhaltungen:
**DE-A1- 3 241 200      US-A1- 2010 250 151**
**US-A1- 2014 020 478**

**Beschreibung**

Die Erfindung betrifft ein Verfahren zur Herstellung eines Schallwandlers für ein Feldgerät der Automatisierungstechnik mit einem Sensorkörper - oftmals auch als Vorlaufkörper bezeichnet - und einem elektromechanischen Wandler, der über zumindest eine Anpassschicht an einer Außenfläche des Sensorkörpers angeordnet ist, wobei sich eine von dem elektromechanischen Wandler erzeugte Schallwelle nach Durchlaufen des Sensorkörpers mit einer definierten SOLL-Ausbreitungsgeschwindigkeit auf einer Austrittsfläche des Sensorkörpers ausbreitet oder wobei sich eine von dem elektromechanischen Wandler erzeugte Schallwelle unter einem definierten SOLL-Winkel zur Senkrechten der Austrittsfläche und der Ausbreitungsrichtung in einem an die Austrittsfläche angrenzenden Medium ausbreitet. Bevorzugt werden entsprechende Ultraschallsensoren bei Durchflussmessgeräten, die den Volumen- und/oder Massenstrom eines Mediums in einer Rohrleitung berührungslos bestimmen, oder bei Non- Destructive Testing Geräten (NDT), also bei zerstörungsfrei arbeitenden Testgeräten, eingesetzt.

Solche Ultraschall-Durchflussmessgeräte und zerstörungsfrei arbeitenden Testgeräten sind aus den Patentschriften DE 3241200 A1, US 2010/0250151 A1 und US 2014/0020478 A1 bekannt.

Ultraschall-Durchflussmessgeräte der Anmelderin arbeiten nach dem Laufzeitdifferenz-Prinzip. Beim Laufzeit-Differenz-Prinzip wird die unterschiedliche Laufzeit von Ultraschall-Messsignalen in Strömungsrichtung und entgegen der Strömungsrichtung des Mediums ausgewertet. Hierzu werden die Ultraschall-Messsignale von den Ultraschallwandlern wechselweise in Strömungsrichtung und entgegen der Strömungsrichtung des Mediums ausgesendet bzw. empfangen. Aus der Laufzeitdifferenz der Ultraschall-Messsignale lässt sich die Fließgeschwindigkeit und damit bei bekanntem Durchmesser der Rohrleitung der Volumendurchfluss bzw. bei bekannter oder gemessener Dichte des Mediums der Massendurchfluss bestimmen.

Hinsichtlich der Typen von Messgeräten wird unterschieden zwischen Ultraschall-Durchflussmessgeräten, die in die Rohrleitung eingesetzt werden, und Clamp-On Durchflussmessgeräten, bei denen die Ultraschall-wandler von außen an die Rohrleitung mittels eines Spannverschlusses angepresst werden.

Bei beiden Typen von Ultraschall-Durchflussmessgeräten werden die Ultraschall-Messsignale bzw. die Schallwellen unter einem vorgegebenen Winkel in die Rohrleitung bzw. in das Messrohr, in der/in dem sich das strömende Medium befindet, eingestrahlt und/oder empfangen. Um eine optimale Impedanzanpassung zu erreichen, werden die Ultraschall-Messsignale über einen Sensorkörper bzw. ein Koppelelement in die Rohrleitung eingekoppelt bzw. aus der Rohrleitung ausgekoppelt. Hauptbestandteil eines Ultraschallwandlers ist zumindest ein elektromechanischer Wandler bzw. ein piezoelektrisches Element, welcher/welches die Ultraschall-Messsignale erzeugt und/oder empfängt. Das elektromechanische Element ist formschlüssig mit dem Sensorkörper verbunden. Bevorzugt erfolgt die Verbindung über eine Klebeschicht.

Um einen Schallstrahl in das Medium unter einem definierten Winkel aussenden zu können, weist der Sensorkörper bzw. das Koppelelement einen definierten Winkel auf. Dieser Winkel lässt sich anhand des Brechungsgesetzes von Snellius ermitteln:

$$\frac{\sin\alpha_M}{c_M} = \frac{\sin\alpha_{SK}}{c_{SK}} = const.$$

mit

$\alpha_M$ : Winkel zur Normalen auf die Grenzfläche im Medium

$\alpha_{SK}$ : Winkel zur Normalen auf die Austrittsfläche der Schallwelle im Sensorkörper. Bevorzugt liegt dieser Winkel bei Ultraschall-Durchflussmessgeräten der Anmelderin bei 38°;

$c_{SK}$ : Schallgeschwindigkeit im Sensorkörper;

$c_M$: Schallgeschwindigkeit im Medium.

Um die gewünschte Messgenauigkeit bei Ultraschallsensoren zu erreichen, müssen sowohl die Toleranzen in den geometrischen Eigenschaften als auch die Toleranzen in den akustischen Eigenschaften der Materialien des Ultraschallsensors in engen Grenzen definiert sein. Ein typisches Clamp-On Ultraschall-Durchflussmessgerät hat eine Messtoleranz von ca. 2% unter herkömmlichen Herstellungsbedingungen. Die Toleranzen in den geometrischen Eigenschaften rühren entweder von Winkelfehlern oder von Schwankungen in der formschlüssigen Verbindung zwischen elektromechanischem Wandler und Sensorkörper her. Schwankungen in den geometrischen Eigenschaften sind üblicherweise dem Fertigungsprozess beim Hersteller geschuldet. Toleranzschwankungen in den akustischen Eigenschaften lassen sich auf Abweichungen in der Zusammensetzung des Materials des Sensorkörpers und der Anpassschicht zurückführen. Diese treten insbesondere zwischen einzelnen Chargen auf. Auch die vom Anwender in einem Speicher des Clamp-On Gerätes abgelegten Parameter des Mediums - aber auch des Messrohres - haben Einfluss auf die Messgenauigkeit der Durchflussmessung.

Um eine höhere Messgenauigkeit zu erzielen, gehen Hersteller teilweise dazu über, die Ultraschallsensoren nach Güteklassen zu selektieren und entsprechende Korrekturfaktoren für einzelne Gruppen zu bestimmen. Diese Korrekturfaktoren werden bei der späteren Verwendung im Messgerät elektronisch zur Veränderung des Messwertes genutzt. Allerdings weicht das reale Schallfeld immer von dem idealen Modell ab. Aus diesem Grund gelingt die Korrektur nie ganz vollständig.

Der Erfindung liegt die Aufgabe zugrunde, ein Verfahren vorzuschlagen, mit dem Toleranzen zwischen einzelnen Ultraschallsensoren korrigiert werden.

Die Aufgabe wird durch ein Verfahren gelöst, das die folgenden Verfahrens-schritte aufweist:

- Bereitstellen eines Sensorkörper mit Übermaß;
- Erregen der Schallwelle über den elektromechanischen Wandler;
- Bestimmen der aktuellen Ausbreitungsgeschwindigkeit der Schallwelle auf der Austrittsfläche des Sensorkörpers oder Bestimmen des aktuellen Winkels zur Senkrechten der Austrittsfläche und der Ausbreitungsrichtung der Schallwelle in dem Medium;
- Bestimmen der Differenz von aktueller Ausbreitungsgeschwindigkeit und SOLL-Ausbreitungsgeschwindigkeit der Schallwelle auf der Austrittsfläche des Sensorkörpers oder Bestimmen der Differenz von aktuellem Winkel und definiertem SOLL-Winkel zur Senkrechten der Austrittsfläche und der Ausbreitungsrichtung der Schallwelle im Medium
- Bestimmen der Differenz der aktuellen Schallgeschwindigkeit im Sensorkörper und der SOLL-Schallgeschwindigkeit;
- Abtragen von Material im Bereich der Austrittsfläche des Sensorkörpers, wobei das verbleibende Material so bemessen wird, dass die aktuelle Ausbreitungsgeschwindigkeit der Schallwelle auf der Austrittsfläche des Sensorkörpers und/oder der Verzögerung durch die Schallgeschwindigkeit im Sensorkörper zumindest näherungsweise mit der SOLL-Ausbreitungsgeschwindigkeit der Schallwelle auf der Austrittsfläche des Sensorkörpers übereinstimmt, oder dass der aktuelle Winkel zur Senkrechten der Austrittsfläche und der Ausbreitungsrichtung mit dem definierten SOLL-Winkel zur Senkrechten der Austrittsfläche und der Ausbreitungsrichtung der Schallwelle in dem Medium zumindest näherungsweise übereinstimmt. Es wird also Material entlang der Mittelachse des Vorlaufkörpers bzw. des Sensorkörpers abgetragen, bis die benötigte Vorlauflänge bzw. die Laufzeit im Vorlauf- oder Sensorkörper erreicht ist.

Mit dem erfindungsgemäßen Verfahren lassen sich alle Abweichungen von einem vorgegebenen Sollwert, die die Messgenauigkeit beeinflussen, von vornherein ausschließen. Der Messfehler der Geräte, in denen nach dem Verfahren gefertigte Ultraschallsensoren eingebaut sind, zeichnet sich durch einen - in Bezug auf die herkömmlichen Ultraschallsensoren - geringeren und weitgehend konstanten Wert aus. Schwankungen in der Messgenauigkeit zwischen einzelnen Ultraschallsensoren lassen sich vermeiden. Insbesondere können die Anforderungen, die an die Fertigungsverfahren der Ultraschallsensoren bei den Herstellern zu stellen sind, heruntergefahren werden, was sich in geringeren Herstellungskosten widerspiegelt.

Gemäß einer vorteilhaften Ausgestaltung des erfindungsgemäßen Verfahrens wird eine SOLL-Laufzeit der Schallwelle im Sensorkörper anhand der SOLL-Schwallgeschwindigkeit vorgegeben, wobei das verbleibende Material so bemessen wird, dass die aktuelle Laufzeit mit der vorgegebenen SOLL-Laufzeit der Schallwelle in dem Sensorkörper zumindest näherungsweise übereinstimmt. Für den Einsatz des Ultraschallwandlers bei Durchflussmessgeräten, die nach dem Laufzeitdifferenzverfahren arbeiten, ist dies natürlich sehr wichtig.

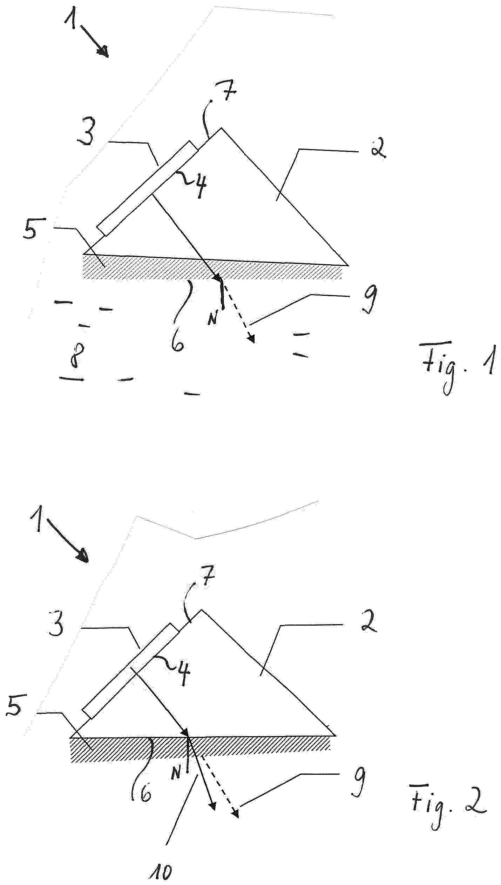

Insbesondere wird in diesem Zusammenhang vorgeschlagen, dass eine SOLL-Laufzeit der Schallwelle im Sensorkörper vorgegeben wird, wobei der elektromechanische Wandler entlang der Außenfläche des Sensorköpers verschoben wird, bis die aktuelle Laufzeit mit der vorgegebenen SOLL-Laufzeit des Schallsignals in dem Sensorkörper zumindest näherungsweise übereinstimmt. Aus Fig. 1 ist gut ersichtlich, dass durch Verschieben des elektromechanischen Wandlers entlang der Seitenfläche der Weg der Schallwellen durch den Sensorkörper variiert werden kann. Bei dieser Ausgestaltung beschränkt sich das Abtragen von Material somit in einer Anpassung des Winkels des Sensorkörpers.

Eine vorteilhafte Ausgestaltung des erfindungsgemäßen Verfahrens schlägt vor, dass die aktuelle Ausbreitungsgeschwindigkeit der Schallwelle auf der Austrittsfläche des Sensorkörpers optisch, insbesondere über ein Interferometer ermittelt wird. Alternativ ist vorgesehen, dass die aktuelle Ausbreitungsgeschwindigkeit der Schallwelle auf der Austrittsfläche des Sensorkörpers über ein Array von elektromechanischen Wandlern bestimmt wird, wobei das Array so dimensioniert und/oder angeordnet ist, dass es zumindest einen Teilbereich der Austrittsfläche abtastet, in dem sich die Schallwelle ausbreitet. Eine alternative Lösung sieht vor, dass die aktuelle Ausbreitungsgeschwindigkeit der Schallwelle auf der Austrittsfläche des Sensorkörpers über zumindest einen elektromechanischen Wandler bestimmt wird, wobei der elektromechanische Wandler entlang von zumindest einem Teilbereich der Austrittsfläche, in dem sich die Schallwelle ausbreitet, verfahren wird. Im ersten Fall handelt es sich um eine parallele Abtastung, im zweiten Fall um eine serielle Abtastung.

Gemäß einer weiteren Variante des erfindungsgemäßen Verfahrens wird der aktuelle Winkel zwischen der Senkrechten (Lot) zur Austrittsfläche und der Ausbreitungsrichtung der Schallwelle in dem Medium akustisch mittels eines Hydrophons bestimmt wird. Alternativ wird angeregt, dass der aktuelle Winkel zwischen der Senkrechten zur Austrittsfläche und der Ausbreitungsrichtung der Schallwelle in dem Medium über ein Array von elektromechanischen Wandlern bestimmt wird, wobei das Array so dimensioniert und/oder angeordnet wird, dass es zumindest einen Teilbereich des Winkelbereichs abtastet, in dem sich die Schallwelle in dem Medium ausbreitet. Alternativ ist vorgesehen, dass der aktuelle Winkel zwischen der Senkrechten zur Austrittsfläche und der Ausbreitungsrichtung der Schallwelle in dem Medium über zumindest einen elektromechanischen Wandler bestimmt wird, wobei der elektromechanische Wandler zumindest in einem Teilbereich des Winkelbereichs verschoben wird, in dem sich die Schallwelle ausbreitet.

Bevorzugt wird das abzutragende Material mechanisch entfernt. Insbesondere wird das abzutragende Material abgefräst und/oder abgeschliffen. Der Abtragungsprozess erfolgt bevorzugt unmittelbar nach der entsprechenden Berechnung des abzutragenden Materials, insbesondere des abzutragenden Materialkeils.

Wie bereits an vorhergehender Stelle erwähnt, wird der nach dem erfindungsgemäßen Verfahren gefertigte Ultraschallwandler bevorzugt bei einem Durchflussmessgerät oder bei einem zerstörungsfrei arbeitenden Testsensor, der z.B. zur Materialprüfung eingesetzt wird, verwendet.

Die Erfindung wird anhand der nachfolgenden Figuren näher erläutert. Es zeigt:

     Fig. 1: eine Seitenansicht eines Ultraschallsensors, bevor das erfindungsgemäße Verfahren angewendet worden ist,

     Fig. 2: eine Seitenansicht des nach dem erfindungsgemäßen Verfahren gefertigten Ultraschallsensors,

     Fig. 3: ein Flussdiagramm, das die einzelnen Schritte einer bevorzugten ersten Ausgestaltung des erfindungsgemäßen Verfahrens zur Herstellung eines Ultraschallsensors visualisiert, und

     Fig. 4: ein Flussdiagramm, das die einzelnen Schritte einer bevorzugten zweiten Ausgestaltung des erfindungsgemäßen Verfahrens zur Herstellung eines Ultraschallsensors visualisiert.

Fig. 1 zeigt eine Seitenansicht eines Ultraschallsensor 1, bevor das erfindungsgemäße Verfahren angewendet worden ist. Gezeigt ist also ein Ultraschallsensor 1, der einen Sensorkörper bzw. einen Vorlaufkörper mit Übermaß darstellt. Fig. 2 zeigt eine Seitenansicht des entsprechenden Ultraschallsensors 1, der nach dem erfindungsgemäßen Verfahren gefertigt worden ist.

Der Ultraschallsensor 1 besteht aus einem Sensorkörper 2 bzw. einem Vorlaufkörper. Gebräuchlich für den Sensorkörper 2 ist auch der Begriff "Koppelelement". An einer Seitenfläche 7 des Sensorkörpers 2 ist über eine Anpassschicht 4 ein elektromechanischer Wandler 3 befestigt. Mit dem Bezugszeichen 5 ist das Material 5 gekennzeichnet, das im gezeigten Fall von dem Sensorkörper 2 abgetragen werden muss, um zu erreichen, dass der aktuelle Ist-Austrittswinkel und der Soll-Austrittswinkel zur Senkrechten N der Austrittsfläche 6 und der Ausbreitungsrichtung der Schallwelle im Medium 8 zumindest näherungsweise übereinstimmen.

Um das Abtragen von größeren Materialmengen entlang der Mittelachse des Sensorkörpers 2 zu vermeiden und dennoch sicherzustellen, dass die von der Schallwelle zu durchlaufende Strecke (Vorlauflänge) im Sensorkörper 2 optimal ist, kann der elektromechanische Wandler 3 entlang der Seitenfläche 7 in die passende Position verschoben werden. In der passenden Position entspricht die aktuelle IST-Schallgeschwindigkeit im Sensorkörper 2 zumindest näherungsweise der Soll-Schallgeschwindigkeit. In dieser korrekten Position erfolgt dann die formschlüssige Verbindung von elektromechanischem Wandler 3 und Sensorkörper 2 über die Anpassschicht 4.

Weiterhin wird die aktuelle Ausbreitungsgeschwindigkeit der Schallwelle auf der Austrittsfläche 6 des Sensorkörpers 2 bestimmt. Alternativ wird der aktuelle Winkel zwischen der Senkrechten N zur Austrittsfläche 6 und der Ausbreitungsrichtung der Schallwelle in dem Medium 8 ermittelt. Anschließend wird die Differenz von aktueller Ausbreitungsgeschwindigkeit und SOLL-Ausbreitungsgeschwindigkeit der Schallwelle auf der Austrittsfläche 6 des Sensorkörpers 2 bzw. die Differenz von aktuellem Winkel und definiertem SOLL-Winkel zwischen der Senkrechten N zur Austrittsfläche 6 und der Ausbreitungsrichtung der Schallwelle im Medium 8 bestimmt.

Das Abschleifen oder Abfräsen von Material 5 im Bereich der Austrittsfläche 6 des Sensorkörpers 2 ist so bemessen, dass die aktuelle Ausbreitungsgeschwindigkeit der Schallwelle auf der Austrittsfläche 6 des Sensorkörpers 2 und/oder der Verzögerung durch die Schallgeschwindigkeit im Sensorkörper 2 zumindest näherungsweise mit der SOLL-Ausbreitungsgeschwindigkeit der Schallwelle auf der Austrittsfläche 6 des Sensorkörpers 2 übereinstimmt. Alternativ erfolgt der Abtrag von Material 5 derart, dass der aktuelle Winkel zwischen der Senkrechten N zur Austrittsfläche 6 und der Ausbreitungsrichtung mit dem definierten SOLL-Winkel zwischen der Senkrechten zur Austrittsfläche 6 und der Ausbreitungsrichtung der Schallwelle in dem Medium 8 zumindest näherungsweise übereinstimmt. In Fig. 1 und in Fig. 2 ist der ursprüngliche Schallstrahl bzw. die ursprüngliche Schallwelle bei nicht erfindungsgemäß gefertigtem Sensorkörper 2 mit Übermaß 5 mit dem Bezugszeichen 9 versehen. In Fig. 2 ist die Schallwelle bzw. der Schallstrahl, die bzw. der nach der Korrektur über das erfindungsgemäße Verfahrens an der "korrigierten" Austrittsfläche 8 auftritt, mit dem Bezugszeichen 10 versehen. Wie aus Fig. 2 ersichtlich, lässt sich mittels des erfindungsgemäßen Verfahrens der Austrittswinkel des Schallstrahls zur Normalen N auf die Austrittsfläche 8 geeignet abändern. Durch das erfindungsgemäße Verfahren lässt sich die Messgenauigkeit von Ultraschall-Durchflussmessgeräten verbessern, da zwischen einzelnen Ultraschallsensoren lauftretende Schwankungen infolge von Toleranzen in den akustischen und/oder geometrischen Eigenschaften der Materialien kompensiert bzw. ausgeglichen werden.

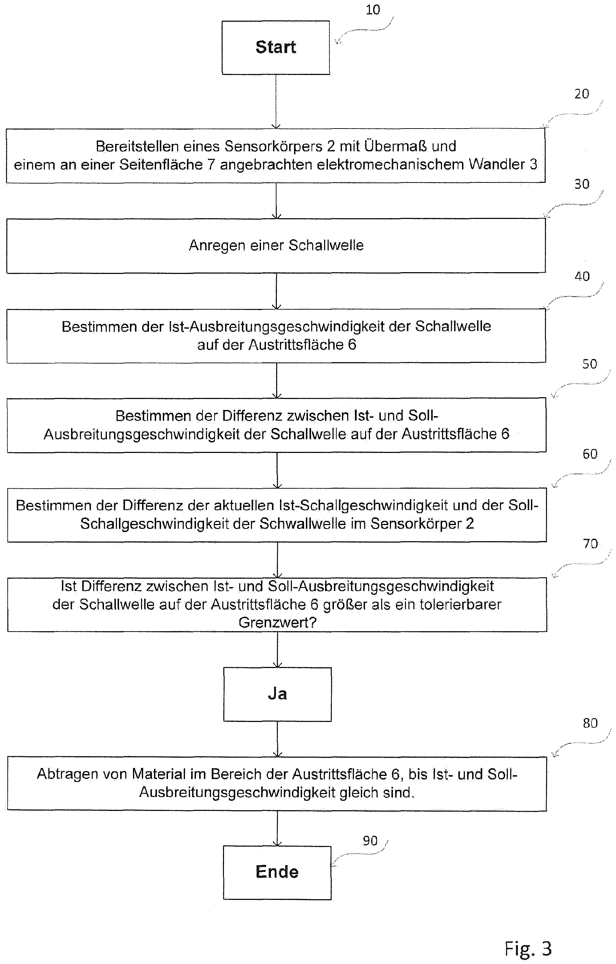

Fig. 3 zeigt ein Flussdiagramm, das die einzelnen Schritte einer bevorzugten ersten Ausgestaltung des erfindungsgemäßen Verfahrens zur Herstellung eines Ultraschallsensors 1 visualisiert. Nach dem Start bei Punkt 10 wird unter Punkt 20 ein Sensorkörper 2 mit Übermaß und einem an einer Seitenfläche 7 angebrachten elektromechanischem Wandler 3 bereitgestellt. Anschließend wird bei Punkt 30 über zumindest ein elektrisches Signal zumindest eine Schallwelle angeregt mit einer definierten Frequenz angeregt.

Unter Punkt 40 wird die Ist-Ausbreitungsgeschwindigkeit der Schallwelle auf der Austrittsfläche 6 des Sensorkörpers 2 bestimmt. Hierzu wird bevorzugt eines der zuvor genannten Verfahren eingesetzt. Bei Punkt 50 wird die Differenz zwischen Ist- und Soll-Ausbreitungsgeschwindigkeit der Schallwelle auf der Austrittsfläche 6 bestimmt. Unter Punkt 60 wird Differenz der aktuellen Ist-Schallgeschwindigkeit und der Soll-Schallgeschwindigkeit der Schwallwelle im Sensorkörper 2 ermittelt. Bevorzugt wird diese Messung über eine Zeitmessung realisiert. Ist die Differenz zwischen der Ist- und der Soll-Ausbreitungsgeschwindigkeit der Schallwelle auf der Austrittsfläche 6 größer als ein tolerierbarer Grenzwert, so wird unter Punkt 80 Material im Bereich der Austrittsfläche 6 abgetragen, bis die Ist- und die Soll-Ausbreitungs-geschwindigkeit gleich sind. Bei Punkt 90 ist das Herstellungsverfahren für einen in hohem Maße optimal gefertigten Sensorkörper 2 beendet.

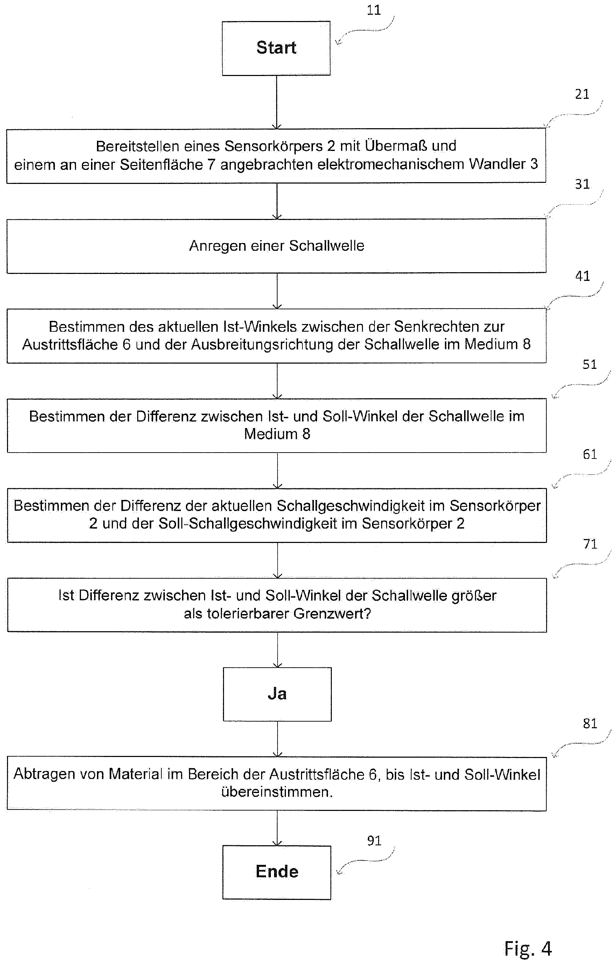

Fig. 4 zeigt ein Flussdiagramm, das die einzelnen Schritte einer bevorzugten zweiten Ausgestaltung des erfindungsgemäßen Verfahrens zur Herstellung eines Ultraschallsensors 1 visualisiert. Nach dem Start bei Punkt 11 wird unter Punkt 21 ein Sensorkörper 2 mit Übermaß und einem an einer Seitenfläche 7 angebrachten elektromechanischem Wandler 3 bereitgestellt. Bei Punkt 31 wird über den elektromechanischen Wandler 3 eine Schallwelle angeregt. Unter Punkt 41 wird der aktuelle Ist-Winkel zwischen der Senkrechten zur Austrittsfläche 6 und der Ausbreitungsrichtung der Schallwelle im Medium 8 bestimmt. Hierzu wird wiederum eines der zuvor genannten Verfahren eingesetzt. Insbesondere wird die Winkelabweichung mittels eines Hydrophons bestimmt. Nach der Bestimmung der Differenz zwischen dem Ist- und dem Soll-Winkel der Schallwelle im Medium 8 (Punkt 51), wird bei Punkt 61 die Differenz der aktuellen Schallgeschwindigkeit im Sensorkörper 2 und der Soll-Schallgeschwindigkeit im Sensorkörper 2 ermittelt. Ist die Differenz zwischen dem Ist- und dem Soll-Winkel der Schallwelle größer als ein vorgegebener tolerierbarer Grenzwert - dies wird unter Punkt 71 bestimmt - so wird bei Punkt 81 Material im Bereich der Austrittsfläche 6 abgetragen, bis der Ist- und der Soll-Winkel übereinstimmen. Anschließend ist das Verfahren zur Herstellung eines hochpräzisen Sensorkörpers 2 bei Punkt 91 beendet.

## Bezugszeichenliste

1 Ultraschallsensor
2 Sensorkörper
3 Elektromechanischer Wandler
4 Anpassschicht
5 Abzutragendes Material
6 Austrittsfläche
7 Seitenfläche
8 Medium
9 Ursprüngliche Schallwelle bzw. ursprünglicher Schallstrahl
10 Schallwelle bzw. Schallstrahl nach Korrektur

## Patentansprüche

1. Verfahren zur Herstellung eines Ultraschallsensors (1) für ein Feldgerät der Automatisierungstechnik mit einem Sensorkörper (2) und einem elektromechanischen Wandler (3), der über zumindest eine Anpassschicht (4) an einer Seitenfläche (7) des Sensorkörpers (2) angeordnet ist, wobei sich eine von dem elektromechanischen Wandler (3) erzeugte Schallwelle nach Durchlaufen des Sensorkörpers (2) mit einer definierten SOLL-Ausbreitungsgeschwindigkeit auf einer Austrittsfläche (6) des Sensorkörpers (2) ausbreitet oder wobei sich eine von dem elektromechanischen Wandler (3) erzeugte Schallwelle unter einem definierten SOLL-Winkel zur Senkrechten zur Austrittsfläche (6) in einem an die Austrittsfläche (6) angrenzenden Medium (8) ausbreitet,
**dadurch gekennzeichnet, dass**
das Verfahren folgende Verfahrensschritte aufweist:

• Bereitstellen eines Sensorkörpers (2) mit Übermaß;
• Erregen der Schallwelle über den elektromechanischen Wandler (3);
• Bestimmen der aktuellen Ausbreitungsgeschwindigkeit der Schallwelle auf der Austrittsfläche (6) des Sensorkörpers (2) oder Bestimmen des aktuellen Winkels zwischen der Senkrechten (N) zur Austrittsfläche (6) und der Ausbreitungsrichtung der Schallwelle in dem Medium (8);
• Bestimmen der Differenz von aktueller Ausbreitungsgeschwindigkeit und SOLL-Ausbreitungsgeschwindigkeit der Schallwelle auf der Austrittsfläche (6) des Sensorkörpers (2) oder Bestimmen der Differenz von aktuellem Winkel und definiertem SOLL-Winkel zwischen der Senkrechten zur Austrittsfläche (6) und der Ausbreitungsrichtung der Schallwelle im Medium (8);
• Bestimmen der Differenz der Schallgeschwindigkeit im Sensorkörper (2) und der SOLL-Schallgeschwindigkeit;
• Abtragen von Material (5) im Bereich der Austrittsfläche (6) des Sensorkörpers (2), wobei das verbleibende Material so bemessen wird, dass die aktuelle Ausbreitungsgeschwindigkeit der Schallwelle auf der Austrittsfläche (6) des Sensorkörpers (2) und/oder der Verzögerung durch die Schallgeschwindigkeit im Sensorkörper (2) zumindest näherungsweise mit der SOLL-Ausbreitungsgeschwindigkeit der Schallwelle auf der Austrittsfläche (6) des Sensorkörpers (2) übereinstimmt, oder dass der aktuelle Winkel zwischen der Senkrechten zur Austrittsfläche (6) und der Ausbreitungsrichtung mit dem definierten SOLL-Winkel zwischen der Senkrechten zur Austrittsfläche (6) und der Ausbreitungsrichtung der Schallwelle in dem Medium (8) zumindest näherungsweise übereinstimmt.

2. Verfahren nach Anspruch 1,
wobei eine SOLL-Laufzeit der Schallwelle im Sensorkörper (2) anhand der SOLL-Schallgeschwindigkeit vorgegeben wird, wobei das verbleibende Material so bemessen wird, dass die aktuelle Laufzeit mit der vorgegebenen SOLL-Laufzeit der Schallwelle in dem Sensorkörper (2) zumindest näherungsweise übereinstimmt.

3. Verfahren nach Anspruch 1,
wobei eine SOLL-Laufzeit der Schallwelle im Sensorkörper (2) vorgegeben wird, wobei der elektromechanische Wandler (3) entlang der Seitenfläche (7) des Sensorköpers (2) verschoben wird, bis die aktuelle Laufzeit mit der vorgegebenen SOLL-Laufzeit der Schallwelle in dem Sensorkörper (2) zumindest näherungsweise übereinstimmt.

4. Verfahren nach einem oder mehreren der Ansprüche 1, 2 oder 3,
wobei die aktuelle Ausbreitungsgeschwindigkeit der Schallwelle auf der Austrittsfläche (6) des Sensorkörpers (2) optisch, insbesondere über ein Interferometer, ermittelt wird.

5. Verfahren nach einem oder mehreren der Ansprüche 1, 2 oder 3,
wobei die aktuelle Ausbreitungsgeschwindigkeit der Schallwelle auf der Austrittsfläche (6) des Sensorkörpers (2) über ein Array von elektromechanischen Wandlern bestimmt wird, wobei das Array so dimensioniert und/oder angeordnet ist, dass es zumindest einen Teilbereich der Austrittsfläche (6) abtastet, in dem sich die Schallwelle ausbreitet.

6. Verfahren nach einem oder mehreren der Ansprüche 1, 2 oder 3,
wobei die aktuelle Ausbreitungsgeschwindigkeit der Schallwelle auf der Austrittsfläche (6) des Sensorkörpers (2) über zumindest einen elektromechanischen Wandler (3) bestimmt wird, wobei der elektromechanische Wandler (3) entlang von zumindest einem Teilbereich der Austrittsfläche (6), in dem sich die Schallwelle ausbreitet, verfahren wird.

7. Verfahren nach einem oder mehreren der Ansprüche 1-4,
wobei der aktuelle Winkel zwischen der Senkrechten zur Austrittsfläche (6) und der Ausbreitungsrichtung der Schallwelle in dem Medium (8) akustisch mittels eines Hydrophons bestimmt wird.

8. Verfahren nach einem oder mehreren der Ansprüche 1-4,
wobei der aktuelle Winkel zwischen der Senkrechten zur Austrittsfläche (6) und der Ausbreitungsrichtung der Schallwelle in dem Medium (8) über ein Array von elektromechanischen Wandlern bestimmt wird, wobei das Array so dimensioniert und/oder angeordnet wird, dass es zumindest einen Teilbereich des Winkelbereichs abtastet, in dem sich die Schallwelle in dem Medium (8) ausbreitet.

9. Verfahren nach einem oder mehreren der Ansprüche 1-4,
wobei der aktuelle Winkel zwischen der Senkrechten zur Austrittsfläche (6) und der Ausbreitungsrichtung der Schallwelle in dem Medium (8) über zumindest einen elektromechanischen Wandler bestimmt wird, wobei der elektromechanische Wandler zumindest in einem Teilbereich des Winkelbereichs verschoben wird, in dem sich die Schallwelle ausbreitet.

10. Verfahren nach einem oder mehreren der vorhergehenden Ansprüche,
wobei das abzutragende Material (5) mechanisch entfernt, insbesondere abgeschliffen wird.

11. Verwendung eines Ultraschallsensors (1), der nach zumindest einem der Verfahrensansprüche 1-10 gefertigt ist, bei einem Durchflussmessgerät.

12. Verwendung eines Ultraschallsensors (1), der nach zumindest einem der Verfahrensansprüche 1-10 gefertigt ist, bei einem zerstörungsfrei arbeitenden Testsensor.

**Claims**

1. Procedure for the production of an ultrasonic sensor (1) for a field device used in automation engineering, with a sensor body (2) and an electromechanical transducer (3), which is arranged on a side surface (7) of the sensor body (2) via at least an adaptation layer (4), wherein a soundwave generated by the electromechanical transducer (3), after passing through the sensor body (2), propagates at a defined TARGET propagation speed at an exit surface (6) of the sensor body (2), or wherein a soundwave generated by the electromechanical transducer (3) propagates at a defined TARGET angle in relation to the perpendicular line to the exit surface (6) in a medium (8) adjacent to the exit surface (6),
**characterized in that** the procedure comprises the following steps:

> • Provision of an oversized sensor body (2);
> • Excitation of the soundwave via the electromechanical transducer (3);
> • Determination of the current speed of propagation of the soundwave at the exit surface (6) of the sensor body (2) or determination of the current angle between the perpendicular line (N) to the exit surface (6) and the direction of propagation of the soundwave in the medium (8);
> • Determination of the difference between the current speed of propagation and the TARGET propagation speed of the soundwave at the exit surface (6) of the sensor body (2) or determination of the difference between the current angle and the defined TARGET angle between the perpendicular line to the exit surface (6) and the direction of propagation of the soundwave in the medium (8);
> • Determination of the difference between the speed of sound in the sensor body (2) and the TARGET speed of sound;
> • Removal of material (5) in the area of the exit surface (6) of the sensor body (2), wherein the remaining material is sized in such a way that the current speed of propagation of the soundwave at the exit surface (6) of the sensor body (2) and/or the delay caused by the speed of sound in the sensor body (2) at least approximately corresponds to the TARGET propagation speed of the soundwave at the exit surface (6) of the sensor body (2), or **in that** the current angle between the perpendicular line to the exit surface (6) and the direction of propagation at least approximately corresponds to the defined TARGET angle between the perpendicular line to the exit surface (6) and the direction of propagation of the soundwave in the medium (8).

2. Procedure as claimed in Claim 1,
   wherein a TARGET transit time of the soundwave in the sensor body (2) is predefined on the basis of the TARGET sound velocity, wherein the remaining material is sized in such a way that the current transit time at least approximately matches the predefined TARGET transit time of the soundwave in the sensor body (2).

3. Procedure as claimed in Claim 1,
   wherein a TARGET transit time of the soundwave in the sensor body (2) is predefined, wherein the electromechanical transducer (3) is shifted along the side surface (7) of the sensor body (2) until the current transit time at least approximately matches the predefined TARGET transit time of the soundwave in the sensor body (2).

4. Procedure as claimed in one or more of the Claims 1, 2 or 3,
   wherein the current speed of propagation of the soundwave at the exit surface (6) of the sensor body (2) is optically determined, particularly using an interferometer.

5. Procedure as claimed in one or more of the Claims 1, 2 or 3,
   wherein the current speed of propagation of the soundwave at the exit surface (6) of the sensor body (2) is determined via an array of electromechanical transducers, wherein the array is sized and/or arranged in such a way to scan at least a subsection of the exit surface (6) in which the soundwave propagates.

6. Procedure as claimed in one or more of the Claims 1, 2 or 3,
   wherein the current speed of propagation of the soundwave at the exit surface (6) of the sensor body (2) is determined by at least an electromechanical transducer (3), wherein the electromechanical transducer (3) is moved along at least a subsection of the exit surface (6) in which the soundwave propagates.

7. Procedure as claimed in one or more of the Claims 1 to 4,
   wherein the current angle between the perpendicular line to the exit surface (6) and the direction of propagation of the soundwave in the medium (8) is acoustically determined using a hydrophone.

8. Procedure as claimed in one or more of the Claims 1 to 4,
   wherein the current angle between the perpendicular line to the exit surface (6) and the direction of propagation of the soundwave in the medium (8) is determined via an array of electromechanical transducers, wherein the array is sized and/or arranged in such a way to scan at least a subsection of the angle range in which the soundwave propagates in the medium (8).

9. Procedure as claimed in one or more of the Claims 1 to 4,
   wherein the current angle between the perpendicular line to the exit surface (6) and the direction of propagation of the soundwave in the medium (8) is determined by at least an electromechanical transducer, wherein the electromechanical transducer is moved at least in a subsection of the angle range in which the soundwave propagates.

10. Procedure as claimed in one or more of the previous claims,

wherein the material (5) to be removed is removed mechanically, particularly by means of abrasion.

11. Use of an ultrasonic sensor (1), which is manufactured according to at least one of the procedure Claims 1 to 10, with a flowmeter.

12. Use of an ultrasonic sensor (1), which is manufactured according to at least one of the procedure Claims 1 to 10, with a non-destructive test sensor.

**Revendications**

1. Procédé destiné à la fabrication d'un capteur à ultrasons (1) pour un appareil de terrain de la technique d'automatisation, avec un corps de capteur (2) et un transducteur électromécanique (3), lequel transducteur est disposé sur une surface latérale (7) du corps de capteur (2) par l'intermédiaire d'au moins une couche d'adaptation (4), une onde sonore générée par le transducteur électromécanique (3), après avoir traversé le corps de capteur (2), se propageant à une vitesse de propagation théorique définie sur une surface de sortie (6) du corps de capteur (2), ou une onde sonore générée par le transducteur électromécanique (3) se propageant à un angle théorique défini par rapport à la normale à la surface de sortie (6) dans un produit (8) adjacent à la surface de sortie (6),
**caractérisé en ce que** le procédé comprend les étapes de procédé suivantes :

 • Mise à disposition d'un corps de capteur (2) avec un surdimensionnement ;
 • Excitation de l'onde sonore par l'intermédiaire du transducteur électromécanique (3) ;
 • Détermination de la vitesse de propagation réelle de l'onde sonore sur la surface de sortie (6) du corps de capteur (2) ou détermination de l'angle réel entre la normale (N) à la surface de sortie (6) et la direction de propagation de l'onde sonore dans le produit (8) ;

 Détermination de la différence entre la vitesse de propagation réelle et la vitesse de propagation théorique de l'onde sonore sur la surface de sortie (6) du corps de capteur (2) ou détermination de la différence entre l'angle réel et l'angle théorique défini entre la normale à la surface de sortie (6) et la direction de propagation de l'onde sonore dans le produit (8) ;
 Détermination de la différence entre la vitesse du son dans le corps du capteur (2) et la vitesse du son théorique ;
 Enlèvement de matière (5) dans la zone de la surface de sortie (6) du corps du capteur (2), la matière restante étant dimensionnée de telle sorte que la vitesse de propagation réelle de l'onde sonore sur la surface de sortie (6) du corps de capteur (2) et/ou le retard dû à la vitesse du son dans le corps de capteur (2) correspondent au moins approximativement à la vitesse de propagation théorique de l'onde sonore sur la surface de sortie (6) du corps de capteur (2), ou **en ce que** l'angle réel entre la normale à la surface de sortie (6) et la direction de propagation correspond au moins approximativement à l'angle théorique défini entre la normale à la surface de sortie (6) et la direction de propagation de l'onde sonore dans le produit (8).

2. Procédé selon la revendication 1,
 pour lequel un temps de parcours théorique de l'onde sonore dans le corps de capteur (2) est prédéfini sur la base de la vitesse sonore théorique, le matériau restant étant dimensionné de telle sorte que le temps de parcours réel coïncide au moins approximativement avec le temps de parcours théorique prédéfini de l'onde sonore dans le corps de capteur (2).

3. Procédé selon la revendication 1,
 pour lequel un temps de parcours théorique de l'onde sonore dans le corps de capteur (2) est prédéfini, le transducteur électromécanique (3) étant déplacé le long de la surface latérale (7) du corps de capteur (2) jusqu'à ce que le temps de parcours réel coïncide au moins approximativement avec le temps de parcours théorique prédéfini de l'onde sonore dans le corps de capteur (2).

4. Procédé selon l'une ou plusieurs des revendications 1, 2 ou 3,
 pour lequel la vitesse de propagation réelle de l'onde sonore sur la surface de sortie (6) du corps de capteur (2) est déterminée optiquement, notamment par un interféromètre.

5. Procédé selon l'une ou plusieurs des revendications 1, 2 ou 3,
 pour lequel la vitesse de propagation réelle de l'onde sonore sur la surface de sortie (6) du corps de capteur (2) est déterminée par l'intermédiaire d'un réseau de transducteurs électromécaniques, le réseau étant dimensionné et/ou agencé de telle sorte à balayer au moins une zone partielle de la surface de sortie (6) dans laquelle se propage l'onde sonore.

6. Procédé selon l'une ou plusieurs des revendications 1, 2 ou 3,
 pour lequel la vitesse de propagation réelle de l'onde sonore sur la surface de sortie (6) du corps de capteur (2) est déterminée par au moins un transducteur électromécanique (3), le transducteur électromécanique (3) étant déplacé le long d'au moins une zone partielle de la surface de sortie (6) dans laquelle se propage l'onde sonore.

**7.** Procédé selon l'une ou plusieurs des revendications 1 à 4,
pour lequel l'angle réel entre la normale à la surface de sortie (6) et la direction de propagation de l'onde sonore dans le produit (8) est déterminé acoustiquement au moyen d'un hydrophone.

**8.** Procédé selon l'une ou plusieurs des revendications 1 à 4,
pour lequel l'angle réel entre la normale à la surface de sortie (6) et la direction de propagation de l'onde sonore dans le produit (8) est déterminé par l'intermédiaire d'un réseau de transducteurs électromécaniques, le réseau étant dimensionné et/ou agencé de telle sorte à balayer au moins une plage partielle de la plage angulaire, dans laquelle l'onde sonore se propage dans le produit (8).

**9.** Procédé selon l'une ou plusieurs des revendications 1 à 4,
pour lequel l'angle réel entre la normale à la surface de sortie (6) et la direction de propagation de l'onde sonore dans le produit (8) est déterminé par au moins un transducteur électromécanique, le transducteur électromécanique étant déplacé au moins dans une plage partielle de la plage angulaire dans laquelle se propage l'onde sonore.

**10.** Procédé selon l'une ou plusieurs des revendications précédentes,
pour lequel la matière (5) à enlever est enlevée mécaniquement, notamment par abrasion.

**11.** Utilisation d'un capteur à ultrasons (1), lequel capteur est fabriqué selon au moins l'une des revendications de procédé 1 à 10, avec un débitmètre.

**12.** Utilisation d'un capteur à ultrasons (1), lequel capteur est fabriqué selon au moins l'une des revendications de procédé 1 à 10, avec un capteur de test non destructif.

Fig. 1

Fig. 2

10

| Start |

20

| Bereitstellen eines Sensorkörpers 2 mit Übermaß und einem an einer Seitenfläche 7 angebrachten elektromechanischem Wandler 3 |

30

| Anregen einer Schallwelle |

40

| Bestimmen der Ist-Ausbreitungsgeschwindigkeit der Schallwelle auf der Austrittsfläche 6 |

50

| Bestimmen der Differenz zwischen Ist- und Soll-Ausbreitungsgeschwindigkeit der Schallwelle auf der Austrittsfläche 6 |

60

| Bestimmen der Differenz der aktuellen Ist-Schallgeschwindigkeit und der Soll-Schallgeschwindigkeit der Schwallwelle im Sensorkörper 2 |

70

| Ist Differenz zwischen Ist- und Soll-Ausbreitungsgeschwindigkeit der Schallwelle auf der Austrittsfläche 6 größer als ein tolerierbarer Grenzwert? |

| Ja |

80

| Abtragen von Material im Bereich der Austrittsfläche 6, bis Ist- und Soll-Ausbreitungsgeschwindigkeit gleich sind. |

90

| Ende |

Fig. 3

11

```
┌─────────────────────┐
│       Start         │
└─────────────────────┘
```

21

```
┌──────────────────────────────────────────────────────────┐
│  Bereitstellen eines Sensorkörpers 2 mit Übermaß und       │
│  einem an einer Seitenfläche 7 angebrachten elektromechanischem Wandler 3 │
└──────────────────────────────────────────────────────────┘
```

31

```
┌──────────────────────────────────────────────────────────┐
│              Anregen einer Schallwelle                     │
└──────────────────────────────────────────────────────────┘
```

41

```
┌──────────────────────────────────────────────────────────┐
│  Bestimmen des aktuellen Ist-Winkels zwischen der Senkrechten zur │
│  Austrittsfläche 6 und der Ausbreitungsrichtung der Schallwelle im Medium 8 │
└──────────────────────────────────────────────────────────┘
```

51

```
┌──────────────────────────────────────────────────────────┐
│  Bestimmen der Differenz zwischen Ist- und Soll-Winkel der Schallwelle im │
│                        Medium 8                            │
└──────────────────────────────────────────────────────────┘
```

61

```
┌──────────────────────────────────────────────────────────┐
│  Bestimmen der Differenz der aktuellen Schallgeschwindigkeit im Sensorkörper │
│  2 und der Soll-Schallgeschwindigkeit im Sensorkörper 2     │
└──────────────────────────────────────────────────────────┘
```

71

```
┌──────────────────────────────────────────────────────────┐
│  Ist Differenz zwischen Ist- und Soll-Winkel der Schallwelle größer │
│              als tolerierbarer Grenzwert?                  │
└──────────────────────────────────────────────────────────┘
```

```
┌─────────────────────┐
│         Ja          │
└─────────────────────┘
```

81

```
┌──────────────────────────────────────────────────────────┐
│  Abtragen von Material im Bereich der Austrittsfläche 6, bis Ist- und Soll-Winkel │
│                    übereinstimmen.                         │
└──────────────────────────────────────────────────────────┘
```

91

```
┌─────────────────────┐
│        Ende         │
└─────────────────────┘
```

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3241200 A1
- US 20100250151 A1
- US 20140020478 A1